# EUROPÄISCHE PATENTSCHRIFT

(11) **EP 2 759 755 B1**
(45) Veröffentlichungstag und Bekanntmachung des Hinweises auf die Patenterteilung: **23.11.2016**
(21) Anmeldenummer: 13196794.5
(22) Anmeldetag: 12.12.2013
(51) Int. Cl.: F16L 33/08

(54) **Spannvorrichtung**
Clamping device
Dispositif de serrage

(30) Priorität: 23.01.2013 DE 102013001125
(43) Veröffentlichungstag der Anmeldung: 30.07.2014
(73) Patentinhaber: NORMA Germany GmbH, 63477 Maintal (DE)
(72) Erfinder: Henrich, Detlef, 63694 Limesheim (DE); Krauss, Mathias, 61130 Nidderau (DE)
(74) Vertreter: Patentanwälte Olbricht Buchhold Keulertz

(56) Entgegenhaltungen:
- GB-A- 765 243
- US-A- 3 757 394
- US-A- 4 047 268
- US-A- 5 315 737

## Beschreibung

Die Erfindung betrifft eine Spannvorrichtung mit einem Spannband, das ein erstes Ende und ein zweites Ende aufweist, und einem Spannkopf, der ein Gehäuse aufweist, das im Bereich des ersten Endes am Spannband befestigt ist und durch das das zweite Ende des Spannbandes hindurchführbar ist, wobei das Spannband an mindestens einer Oberfläche eine Eingriffsgeometrie aufweist, die mit einem Eingriffselement im Gehäuse in Eingriff bringbar ist, das Eingriffselement als Spannschraube ausgebildet ist, die durch eine gelenkige Verbindung mit dem Gehäuse verbunden ist, wobei die Spannschraube zwischen einer Durchzugsstellung, in der das Spannband durch das Gehäuse ziehbar ist, und einer Eingriffsstellung, in der die Spannschraube mit der Eingriffsgeometrie in Eingriff steht, verschwenkbar ist, und die Spannschraube einen Gewindeabschnitt, eine Spitze an einem Ende und eine Drehmomentangriffsgeometrie am anderen Ende auf, wobei die gelenkige Verbindung im Bereich der Spitze der Spannschraube angeordnet ist.

Eine derartige Spannvorrichtung ist aus US 5 315 377 A, US 4 047 268 A, GB 765 243 A und US 3 757 394 A bekannt.

Eine derartige Spannvorrichtung wird beispielsweise als Kabelbinder verwendet, um ein Bündel von Kabeln oder Leitungen zusammenzufassen oder ein derartiges Bündel oder auch nur ein einzelnes Kabel an einem Halter zu befestigen. Hierzu wird das Spannband um die miteinander zu verbindenden Teile herumgeführt. Das zweite Ende des Spannbandes wird dann in das Gehäuse des Spannkopfes eingeführt und durch das Gehäuse hindurchgezogen, so dass das Eingriffselement mit der Eingriffsgeometrie an der Oberfläche des Spannbandes in Eingriff kommt. Dieser Eingriff ist in den meisten Fällen nicht oder nur mit einem erheblichen Aufwand wieder lösbar. In den meisten Fällen lässt sich mit dem Spannband nur eine begrenzte Spannkraft radial nach innen aufbringen, was für das Zusammenfassen von Kabeln ohne weiteres ausreicht, für andere Verwendungszwecke aber unter Umständen nicht mehr genügt. Dies gilt auch dann, wenn man zum Festziehen des Spannbandes ein Werkzeug verwendet, beispielsweise eine Zange.

Allerdings hat eine derartige Spannvorrichtung den Vorteil, dass man den vom Spannband, das in das Gehäuse eingeführt ist, umgrenzten Raum auf einfache Weise in relativ weiten Grenzen schnell verändern kann. Diese Veränderung erfolgt einfach dadurch, dass man das zweite Ende des Spannbandes durch das Gehäuse hindurchzieht.

Der Erfindung liegt die Aufgabe zugrunde, bei einer vorbestimmten Variationsmöglichkeit des Durchmessers bei einer Spannvorrichtung eine hohe Spannkraft zu erzielen.

Diese Aufgabe wird bei einer Spannvorrichtung der eingangs genannten Art dadurch gelöst, dass die Spannschraube zwischen dem Gewindeabschnitt und der Drehmomentangriffsgeometrie einen Zwischenabschnitt mit zunehmendem Durchmesser auf, der in der Durchzugsstellung zur Anlage an eine Innenkante des Gehäuses kommt, die vom Spannband entfernt ist.

Bei einer derartigen Spannvorrichtung kombiniert man die Vorteile eines Kabelbinders mit den Vorteilen einer Schelle, beispielsweise einer Schlauchschelle oder einer Schneckengewindeschelle. Es ist ohne weiteres möglich, den Durchmesser des vom Spannband umgebenen Raumes schnell zu variieren, in dem man das zweite Ende des Spannbandes einfach durch das Gehäuse hindurchzieht, bis der gewünschte Innendurchmesser erreicht ist. Bei dieser Durchzugsbewegung befindet sich die Spannschraube in der Durchzugsstellung. Wenn das Spannband sozusagen bis zum Anschlag durch das Gehäuse hindurchgezogen worden ist, wobei der Anschlag durch den Gegenstand oder die Gegenstände gebildet ist, um die das Spannband herumgeführt worden ist, dann kann man die Spannschraube verwenden, um eine höhere Spannkraft aufzubringen, indem man die Spannschraube dreht. Hierzu wird die Spannschraube in die Eingriffsstellung verschwenkt. Da die Spannschraube über eine gelenkige Verbindung mit dem Gehäuse in Verbindung steht, ist eine derartige Schwenkbewegung ohne weiteres möglich. Eine Schwenkbewegung hat gegenüber einer reinen Verlagerungsbewegung den Vorteil, dass das Herstellen des Eingriffs zwischen der Spannschraube und der Eingriffsgeometrie und das Lösen dieses Eingriffs kontrolliert erfolgen können. Dieser Eingriff beginnt in der Nähe der gelenkigen Verbindung, wenn die Spannschraube in die Eingriffsstellung verschwenkt wird. Beim Verschwenken in die Durchzugsstellung kann die Spannschraube jedenfalls mit einem großen Teil ihres Gewindes einen relativ großen Abstand zur Eingriffsgeometrie bekommen, was das Durchziehen des Spannbandes durch das Gehäuse erheblich vereinfacht. Die Spannschraube kommt bei der Bewegung in die Eingriffsstellung zunächst mit dem Teil des Gewindes in Eingriff mit der Eingriffsgeometrie am Spannband, das der Spitze der Spannschraube benachbart ist. Dort ergibt sich dann auch der kleinste Hebelarm zur gelenkigen Verbindung, so dass dieser Eingriff bereits mit einer relativ hohen Kraft erfolgen kann. Durch die Zunahme des Durchmessers wird die Spannschraube mit ihrem der Drehmomentangriffsgeometrie benachbarten Ende dem Spannband angenähert, wenn die Spannschraube entlang ihrer Rotationsachse in das Gehäuse hineinbewegt wird. Dadurch wird der Eingriff zwischen der Spannschraube und dem Spannband verstärkt.

Vorzugsweise erlaubt die gelenkige Verbindung eine Bewegung der Spannschraube entlang ihrer Längsachse. Die gelenkige Verbindung ermöglicht also eine zusätzliche Bewegungsmöglichkeit der Spannschraube, so dass es noch einfacher ist, die Spannschraube außer Eingriff mit der Eingriffsgeometrie am Spannband zu bringen oder umgekehrt den Eingriff herzustellen.

Besonders bevorzugt ist, dass die Spannschraube unverlierbar im Gehäuse gehalten ist. Man muss also keine besondere Aufmerksamkeit darauf verwenden, dass die Spannschraube im Gehäuse bleibt, wenn man das Spannband aus dem Gehäuse herauszieht. Die Verliersicherung kann beispielsweise durch die gelenkige Verbindung gebildet sein.

Hierbei ist bevorzugt, dass die Spannschraube einen sich an den Gewindeabschnitt anschließenden Fortsatz aufweist, der in eine Öffnung im Gehäuse eingesteckt ist und der an seinem vom Gewindeabschnitt abgewandten Ende eine Verdickung aufweist. Dieser Fortsatz bildet dann einen Teil der gelenkigen Verbindung. Diese gelenkige Verbindung erlaubt sowohl ein Verschwenken der Spannschraube gegenüber dem Gehäuse als auch eine translatorische Bewegung der Spannschraube gegenüber dem Gehäuse. Die Verdickung bildet einen Teil der Verliersicherung.

Vorzugsweise ist der Fortsatz zwischen dem Gewindeabschnitt und der Verdickung glatt. Die Spannschraube lässt sich also in der Öffnung im Gehäuse bewegen, ohne dass hier höhere Reibungskräfte oder Kräfte durch Formschluss entstehen.

Vorzugsweise ist die Öffnung im Gehäuse als Langloch ausgebildet, in das die Spitze der Spannschraube hineinragt. Dieses Langloch erlaubt eine Bewegung der Spannschraube quer zu ihrer Längsrichtung. Das Langloch vergrößert also die Bewegungsmöglichkeiten der Spannschraube im Gehäuse weiter. Auch lässt sich die Spannschraube gegenüber dem Gehäuse auch dann ausreichend weit verschwenken, wenn der Fortsatz eine gewisse Länge aufweist.

Hierbei ist besonders bevorzugt, dass das Langloch eine Bewegung der Spannschraube senkrecht zum Spannband ermöglicht. Durch diese Beweglichkeit ist es besonders einfach, den Eingriff zwischen der Spannschraube und dem Spannband herzustellen oder wieder aufzulösen. Zweckmäßigerweise weist das Gehäuse dann eine Schrägfläche auf, an der die Spannschraube in Richtung auf die Eingriffsgeometrie des Spannbandes geführt werden kann, wenn ein gewisser Zug vom Spannband auf die Spannschraube ausgeübt wird. Diese Schrägfläche bewegt dann die Spannschraube unter Führung des Langlochs radial nach innen, so dass der Eingriff mit dem Spannband weiter verstärkt wird.

Hierbei ist bevorzugt, dass die Spannschraube auf der vom Gewindeabschnitt abgewandten Seite des Zwischenabschnitts eine Durchmesservergrößerung mit einer konischen Mantelfläche aufweist, wobei die konische Mantelfläche mit einer Abschrägung an einer Eingangsöffnung des Gehäuses zusammenwirkt. Wenn man die Spannschraube entlang ihrer Rotationsachse in das Gehäuse hineindrückt, dann bewirkt die Durchmesservergrößerung, die an der Mantelfläche entlanggleitet, dass die Schraube mit der Durchmesservergrößerung radial nach innen in Richtung auf das Spannband bewegt wird, so dass sich ein Eingriff zwischen der Spannschraube und der Eingriffsgeometrie am Spannband letztendlich über die volle Länge des Gewindeabschnitts herstellen lässt.

Die Erfindung wird im Folgenden anhand eines bevorzugten Ausführungsbeispiels in Verbindung mit der Zeichnung beschrieben. Hierin zeigen:
- Fig. 1: eine Spannvorrichtung mit einer Spannschraube in Eingriff mit einem Spannband,
- Fig. 2: die Spannvorrichtung mit der Spannschraube außer Eingriff mit dem Spannband und
- Fig. 3: eine Darstellung zur Erläuterung des Übergangs zwischen Eingriffsstellung und Durchzugsstellung.

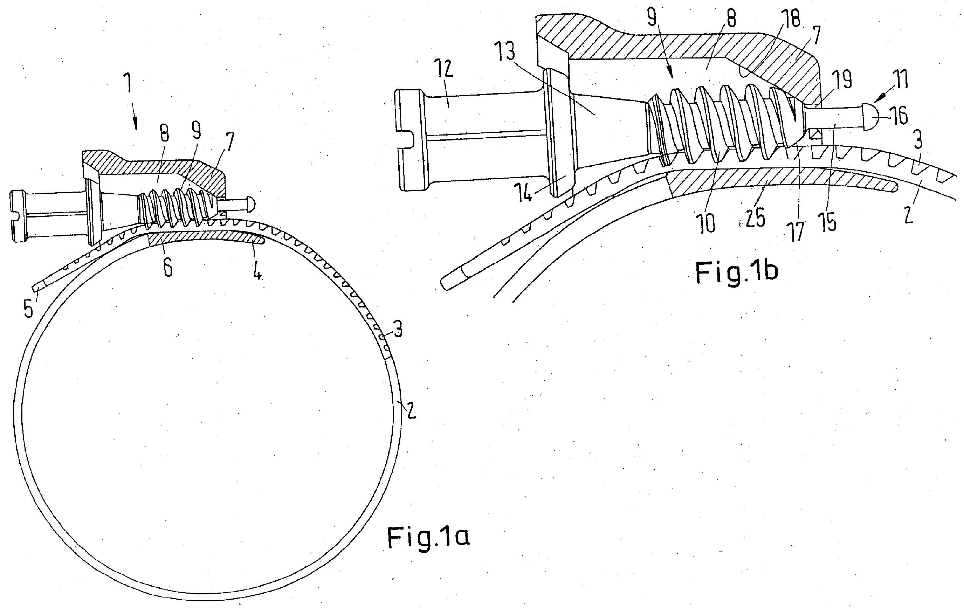

Fig. 1 a zeigt eine Spannvorrichtung 1 in schematischer Seitenansicht, teilweise im Schnitt. Die Spannvorrichtung 1 weist ein Spannband 2 auf, das an einem Teil seiner radial äußeren Oberfläche eine Eingriffsgeometrie aufweist, die im vorliegenden Fall als eingeprägtes Gewinde ausgebildet ist, wie dies beispielsweise von einer Schneckengewindeschelle her bekannt ist.

Das Spannband 2 weist ein erstes Ende 4 und ein zweites Ende 5 auf. Im Bereich des ersten Endes 4 ist ein Spannkopf 6 befestigt, der ein Gehäuse 7 mit einem Aufnahmeraum 8 für eine Spannschraube 9 aufweist.

Das Gehäuse 7 und die Spannschraube 9 werden mit weiteren Einzelheiten in Zusammenhang mit Fig. 1b erläutert.

Die Spannschraube 9 weist einen Gewindeabschnitt 10, eine Spitze 11 an einem Ende und eine Drehmomentangriffsgeometrie 12 am anderen Ende auf. Zwischen der Drehmomentangriffsgeometrie 12 und dem Gewindeabschnitt 10 ist ein Zwischenabschnitt 13 vorgesehen, der konisch ausgebildet ist, also einen sich vergrößernden Durchmesser aufweist, wobei die Durchmesservergrößerung vom Gewindeabschnitt 10 zur Drehmomentangriffsgeometrie 12 erfolgt. Zwischen dem Zwischenabschnitt 13 und der Drehmomentangriffsgeometrie 12 ist eine Durchmesservergrößerung 14 vorgesehen, die eine konische Mantelfläche aufweist, deren Durchmesser sich zur Drehmomentangriffsgeometrie 12 hin vergrößert.

An den Gewindeabschnitt 10 schließt sich zur Spitze 11 hin ein Fortsatz 15 an, der an einer Verdickung 16 endet. Der Fortsatz 15 ist zwischen dem Gewindeabschnitt 10 und der Verdickung 16 glatt ausgebildet.

Der Gewindeabschnitt 10 hat an seinem dem Fortsatz 15 zugewandten Ende einen konischen Abschnitt 17. Der Gewindeabschnitt 10 kann auch bereits vor dem konischen Abschnitt 17 enden. Der konische Abschnitt 17 kann also frei von Gewindeelementen sein.

Der Aufnahmeraum 8 des Gehäuses 7 weist an seinem der Spitze 11 benachbarten Ende eine Schrägfläche 18 auf, die einen Teil eines Innenkonus bildet. Der Winkel des konischen Abschnitts 17 und der Winkel der Schrägfläche 18 sind zumindest ungefähr gleich groß. Vorzugsweise sind sie sogar genau gleich groß.

Das Gehäuse 7 weist eine Durchgangsöffnung 19 auf, durch die der Fortsatz 15 geführt ist. Die Durchgangsöffnung 19 ist als Langloch ausgebildet, d.h. sie weist eine Erstreckung senkrecht zum Schellenband 2 auf, die größer ist als eine Erstreckung parallel zur Achsrichtung des ringförmig geschlossenen Schellenbandes 2. Die Erstreckung parallel zur Achsrichtung des Schellenbandes 2 ist kleiner als der Durchmesser der Verdickung 16, so dass die Spannschraube 9 unverlierbar im Gehäuse 7 gehalten ist.

Die Durchgangsöffnung 19 und der Fortsatz 15 bilden zusammen eine gelenkige Verbindung. Diese gelenkige Verbindung erlaubt eine Bewegung der Spannschraube 9 gegenüber dem Gehäuse 7 mit mehreren Freiheitsgraden. Zum einen kann sich die Schraube 9 entlang ihrer Achsrichtung gegenüber dem Gehäuse 7 bewegen. Diese Bewegung wird durch den konischen Abschnitt 17 einerseits und die Verdickung 16 des Fortsatzes 15 andererseits begrenzt. Sie reicht aber aus, damit der konische Abschnitt 17 von der Schrägfläche 18 frei kommen kann.

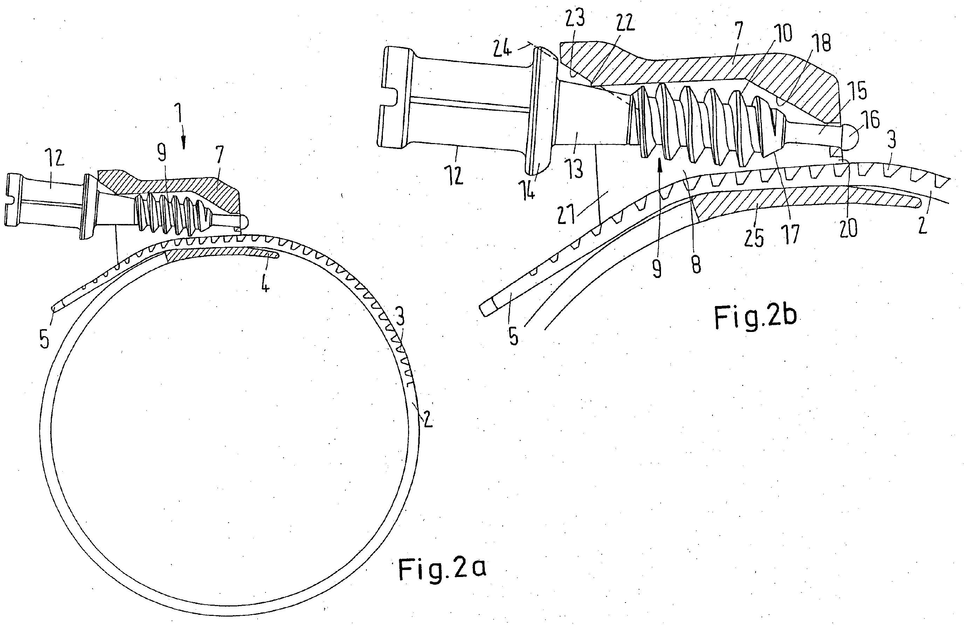

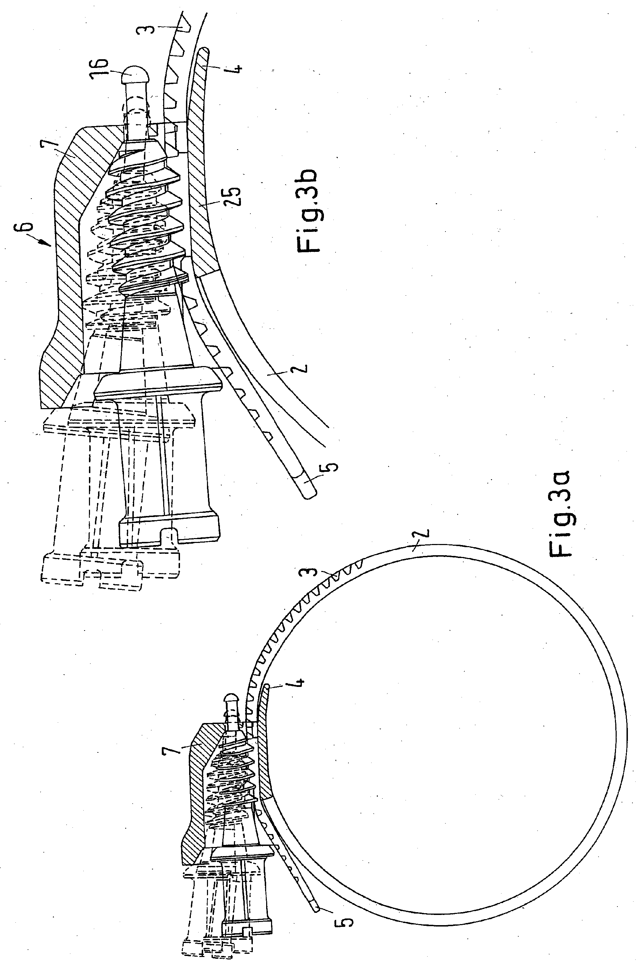

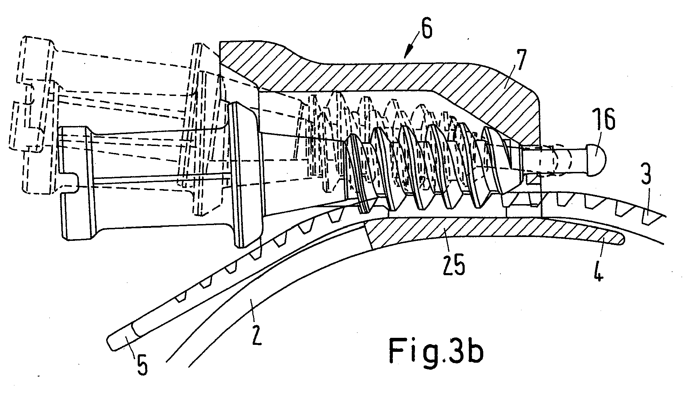

Darüber hinaus erlaubt die gelenkige Verbindung eine Bewegung der Spannschraube 9 gegenüber dem Spannband 2 radial nach außen. Schließlich erlaubt die als Langloch ausgebildete Durchgangsöffnung 19 auch, dass die Spannschraube 9 gegenüber dem Gehäuse 7 verschwenkt wird, wie dies in Fig. 3 zu erkennen ist. Dort ist die Spannschraube 9 mit durchgezogenen Linien in der in Fig. 1b dargestellten Eingriffsstellung dargestellt. Mit gestrichelten Linien ist die Spannschraube 9 in einer Position zwischen der Eingriffsstellung und einer in Zusammenhang mit Fig. 2 noch zu erläuternden Durchzugsstellung dargestellt und darüber hinaus auch in der Durchzugsstellung, die in Fig. 2 dargestellt ist.

In den Fig. 2 und 3 sind die gleichen Elemente mit den gleichen Bezugszeichen wie in Fig. 1 bezeichnet.

In der Durchzugsstellung ist die Spannschraube 9 nicht mehr in Eingriff mit der Eingriffsgeometrie 3 am Spannband 2, so dass das Spannband 2 frei durch das Gehäuse 7 gezogen werden kann. Das Gehäuse 7 weist hierzu eine Durchzugsöffnung 20 auf, in die das zweite Ende 5 des Spannbandes 2 eingefädelt werden kann.

Der Aufnahmeraum des Gehäuses 7 weist eine Eingangsöffnung 21 auf. In der Durchzugsstellung liegt der Zwischenabschnitt 13 an einer die Eingangsöffnung 21 begrenzenden Innenkante 22 an. Diese Innenkante 22 begrenzt also gemeinsam mit dem Zwischenabschnitt 13 den Schwenkwinkel, den die Spannschraube 9 gegenüber dem Gehäuse 7 ausführen kann. Außerhalb der Eingangsöffnung 21 weist das Gehäuse 7 eine schräge Innenseite 23 auf. Durch eine gestrichelte Linie 24 ist angedeutet, dass die Durchmesservergrößerung 14 etwas radial außerhalb einer Verlängerung der schrägen Innenseite 23 des Gehäuses 7 angeordnet ist, wenn sich die Spannschraube 9 in der Durchzugsstellung befindet.

Der Weg der Spannschraube zwischen der in Fig. 1 dargestellten Eingriffsstellung und der in Fig. 2 dargestellten Durchzugsstellung und umgekehrt lässt sich anhand von Fig. 3 nachvollziehen.

In der Eingriffsstellung liegt der konische Abschnitt 17 an der Schrägfläche 18 des Gehäuses 7 an. Der Fortsatz 15 ist in voller Länge durch die Durchgangsöffnung 19 hindurch geführt worden, d.h. die Verdickung 16 ragt so weit wie möglich aus dem Gehäuse 7 heraus. Der Gewindeabschnitt 10 steht mit der Eingriffsgeometrie 3 des Spannbandes 2 in Eingriff. Das Spannband 2 wird in dem Bereich, wo die Spannschraube 9 mit dem Spannband 2 in Eingriff steht, durch einen Gehäuseboden 25 unterstützt. Der Gehäuseboden 25 ist hier als Teil des ersten Endes 4 des Spannbandes 2 dargestellt. Der Gehäuseboden 25 kann aber auch getrennt vom Spannband 2 ausgebildet und mit dem Spannband 2 verbunden sein.

Durch Drehen der Spannschraube 9 kann der Gewindeabschnitt 10 das Spannband 2 weiter durch das Gehäuse 7 hindurch bewegen. Bei einem rechtsgängigen Gewinde bewirkt ein Drehen der Spannschraube 9 im Uhrzeigersinn eine Bewegung des Spannbandes 2 in das Gehäuse 7 hinein, was zu einer Erhöhung der vom Spannband 2 radial nach innen ausgeübten Spannung führt. Gleichzeitig wird das Spannband 2 auch in Umfangsrichtung gespannt. Der dabei auftretende Zug bewirkt, dass die Spannschraube 9 stärker an die Schrägfläche 18 gedrückt wird, wodurch der Eingriff zwischen der Spannschraube 9 und dem Spannband 2 verstärkt wird.

Eine Drehung der Spannschraube 9 entgegen des Uhrzeigersinns bewirkt, dass das Spannband 2 aus dem Gehäuse 7 heraus bewegt wird. Dabei lässt der Zug auf das Spannband 2 in Umfangsrichtung nach und es ist leichter, die Spannschraube 9 außer Eingriff mit dem Spannband 2 zu bringen.

Wenn der zwischen dem Spannband 2 und der Spannschraube 9 wirkende Zug klein genug ist, dann kann man die Spannschraube 9 etwas in eine Richtung aus dem Gehäuse 7 herausziehen und zwar solange, bis die Verdickung 16 außen zur Anlage an das Gehäuse kommt, wie dies in Fig. 2b zu erkennen ist. Während dieser Bewegung oder nach dieser Bewegung kann die Spannschraube 9 verschwenkt werden, wobei der Fortsatz 15 mit der Durchgangsöffnung 19 einen Schwenkpunkt bildet. Diese Schwenkbewegung kann fortgesetzt werden, bis der Zwischenabschnitt 13 zur Anlage an die Innenkante 22 des Gehäuses 7 kommt. In dieser Winkellage ist die Spannschraube 9 weit genug vom Spannband 2 entfernt, so dass der Gewindeabschnitt 10 außer Eingriff mit der Eingriffsgeometrie 3 kommt. Auch wenn dieser Eingriff nicht vollständig aufgelöst wird, ist es doch möglich, das Spannband 2 aus dem Gehäuse 7 herauszuziehen.

Wenn man umgekehrt die Spannvorrichtung 1 spannen möchte, dann wird das zweite Ende 5 des Spannbandes 2 durch die Durchzugsöffnung 20 des Gehäuses 7 hindurchgeführt. Hierbei spielt es zunächst keine Rolle, in welcher Position sich die Spannschraube 9 befindet. Sollte sich die Spannschraube 9 in der in Fig. 1 dargestellten Eingriffsstellung befinden, dann wird die Spannschraube 9, sobald die Eingriffsgeometrie 3 mit dem Gewindeabschnitt 10 in Eingriff kommt, entlang ihrer Rotationsachse verlagert, bis die Verdickung 16 außen am Gehäuse anliegt und die Spannschraube 9 in die Durchzugsstellung verschwenkt werden kann.

Wenn das Spannband 2 weit genug durch das Gehäuse 7 hindurchgeführt worden ist, beispielsweise indem ein Monteur am zweiten Ende 5 zieht, kann man durch einen leichten Druck auf die Spannschraube 9 diese in die Eingriffsstellung bewegen, wenn der Druck entlang der Rotationsachse der Spannschraube 9 gerichtet ist. Bei dieser Bewegung gleitet die Durchmesservergrößerung 14 an der schrägen Innenseite 23 entlang, was dazu führt, dass die Spannschraube 9 auf das Spannband 2 zu geschwenkt wird. Bei einer weiteren Bewegung kommt der konische Abschnitt 17 zur Anlage an die Schrägfläche 18, was dazu führt, dass der Gewindeabschnitt 10 in Eingriff mit der Eingriffsgeometrie 3 am Spannband 2 kommt. Dieser Eingriff erfolgt mit einer relativ großen Kraft, weil ein Hebelarm zwischen dem Schwenkpunkt der Spannschraube 9, der in der Durchgangsöffnung 19 ausgebildet ist, und dem Gewindeabschnitt 10 kürzer ist als ein Hebelarm zwischen dem Schwenkpunkt und der Drehmomentangriffsgeometrie 12, an der der Monteur angreift. Sobald der Eingriff zwischen der Spannschraube 9 und dem Spannband 2 hergestellt ist, kann man die Spannvorrichtung 1 einfach dadurch spannen, dass man die Spannschraube 9 um ihre Rotationsachse dreht. Die Rotationsachse verläuft dabei durch den Fortsatz 15.

Das Spannband 2 kann aus einem Metall gebildet sein. Es kann aber auch aus einem Kunststoff gebildet sein. In gleicher Weise kann auch das Gehäuse 7 aus einem Metall oder einem Kunststoff gebildet sein. Das Gleiche gilt für die Spannschraube 9. Die Wahl der Werkstoffe richtet sich nach dem beabsichtigten Verwendungszweck.

## Patentansprüche

1. Spannvorrichtung (1) mit einem Spannband (2), das ein erstes Ende (4) und ein zweites Ende (5) aufweist, und einem Spannkopf (6), der ein Gehäuse (7) aufweist, das im Bereich des ersten Endes (4) am Spannband (2) befestigt ist und durch das das zweite Ende (5) des Spannbandes (2) hindurchführbar ist, wobei das Spannband (2) an mindestens einer Oberfläche eine Eingriffsgeometrie (3) aufweist, die mit einem Eingriffselement im Gehäuse (7) in Eingriff bringbar ist, wobei das Eingriffselement als Spannschraube (9) ausgebildet ist, die durch eine gelenkige Spannschraube (9) ausgebildet ist, die durch eine gelenkige Verbindung mit dem Gehäuse (7) verbunden ist, die Spannschraube (9) zwischen einer Durchzugsstellung, in der das Spannband (2) durch das Gehäuse (7) ziehbar ist, und einer Eingriffsstellung, in der die Spannschraube (9) mit der Eingriffsgeometrie (3) in Eingriff steht, verschwenkbar ist, und wobei die Spannschraube (9) einen Gewindeabschnitt (10), eine Spitze (11) an einem Ende und eine Drehmomentangriffsgeometrie (12) am anderen Ende aufweist, wobei die gelenkige Verbindung im Bereich der Spitze (11) der Spannschraube (9) angeordnet ist, **dadurch gekennzeichnet, dass** die Spannschraube (9) zwischen dem Gewindeabschnitt (10) und der Drehmomentangriffsgeometrie (12) einen Zwischenabschnitt (13) mit zunehmendem Durchmesser aufweist, der in der Durchzugsstellung zur Anlage an eine Innenkante (22) des Gehäuses (7) kommt, die vom Spannband (2) entfernt ist.

2. Spannvorrichtung nach Anspruch 1, **dadurch gekennzeichnet, dass** die gelenkige Verbindung eine Bewegung der Spannschraube (9) entlang ihrer Längsachse erlaubt.

3. Spannvorrichtung nach Anspruch 1 oder 2, **dadurch gekennzeichnet, dass** die Spannschraube (9) unverlierbar im Gehäuse (7) gehalten ist.

4. Spannvorrichtung nach einem der Ansprüche 1 bis 3, **dadurch gekennzeichnet, dass** die Spannschraube (9) einen sich an den Gewindeabschnitt (10) anschließenden Fortsatz (15) aufweist, der in eine Öffnung (19) im Gehäuse (7) eingesteckt ist und der an seinem vom Gewindeabschnitt (10) abgewandten Ende eine Verdickung (16) aufweist.

5. Spannvorrichtung nach Anspruch 4, **dadurch gekennzeichnet, dass** der Fortsatz (15) zwischen dem Gewindeabschnitt (10) und der Verdickung (16) glatt ist.

6. Spannvorrichtung nach Anspruch 4 oder 5, **dadurch gekennzeichnet, dass** die Öffnung (19) im Gehäuse (7) als Langloch ausgebildet ist, in das die Spitze der Spannschraube (9) hineinragt.

7. Spannvorrichtung nach Anspruch 6, **dadurch gekennzeichnet, dass** das Langloch eine Bewegung der Spannschraube (9) senkrecht zum Spannband (2) ermöglicht.

8. Spannvorrichtung nach einem der Ansprüche 1 bis 7, **dadurch gekennzeichnet, dass** die Spannschraube (9) auf der vom Gewindeabschnitt (10) abgewandten Seite des Zwischenabschnitts (13) eine Durchmesservergrößerung (14) mit einer konischen Mantelfläche aufweist, wobei die konische Mantelfläche mit einer Abschrägung (23) an einer Eingangsöffnung (21) des Gehäuses (7) zusammenwirkt.

## Claims

1. A clamping device (1) comprising a clamping band (2) having a first end (4) and a second end (5) and a tensioning head (6) having a housing (7) attached to the clamping band (2) in the region of the first end (4) and through which the second end (5) of the clamping band (2) is guidable, wherein the clamping band (2) comprises an engagement geometry (3) on at least one surface, the engagement geometry being engageable with an engagement element in the housing (7), wherein the engagement element is formed as a clamping screw (9) connected to the housing (7) by a flexible connection, the clamping screw (9) being swivelable between a pull-through position, in which the clamping band (2) may be pulled through the housing (7), and an engagement position, in which the clamping screw (9) may engage with the engagement geometry (3), and wherein the clamping screw (9) comprises a threaded section (10), a tip (11) at a first end and a torsional contact geometry (12) at a second end, wherein the flexible connection is arranged in a region of the tip (11) of the clamping screw (9), **characterized in that** the clamping screw (9) has an intermediate section (13) located between the threaded section (10) and the torsional contact geometry (12), wherein the intermediate section has an increasing diameter that comes to bear against an inner edge (22) of the housing (7) in the pull-through position, the inner edge being distal to the clamping band (2).

2. The clamping device according to claim 1, **characterized in that** the flexible connection allows motion of the clamping screw (9) along the longitudinal axis.

3. The clamping device according to claim 1 or 2, **characterized in that** the clamping screw (9) is captively held in the housing (7).

4. The clamping device according to any of claims 1 to 3, **characterized in that** the clamping screw (9) has a projection (15) connected to the threaded section (10), the projection being insertable into an opening (19) in the housing (7) and having an enlargement (16) at an end opposite the threaded section (10).

5. The clamping device according to claim 4, **characterized in that** the projection (15) between the threaded section (10) and the enlargement (16) is smooth.

6. The clamping device according to claim 4 or 5, **characterized in that** the opening (19) in the housing (7) is an elongated hole into which the tip of the clamping screw (9) projects.

7. The clamping device according to claim 6, **characterized in that** the elongated hole enables motion of the clamping screw (9) perpendicular to the clamping band (2).

8. The clamping device according to any of claims 1 to 7, **characterized in that** the clamping screw (9), on a side of the intermediate section (13) opposite the threaded section (10), comprises a conical outer surface with an increasing diameter (14), wherein the conical outer surface is structured to interact with a bevel (23) located on an entrance opening (21) of the housing (7).

## Revendications

1. Dispositif de serrage (1) avec une courroie de serrage (2) présentant une première extrémité (4) et une seconde extrémité (5), comportant une tête de serrage (6), présentant un logement (7), fixée à la courroie de serrage (2) dans une région de la première extrémité (4) et à travers laquelle la seconde extrémité (5) de la courroie de serrage (2) est montée coulissante, dans lequel la courroie de serrage (2) présente au moins une surface avec une géométrie d'engagement (3) avec laquelle un élément d'engagement, situé dans le logement (7), est apte à venir en prise, dans lequel l'élément d'engagement, relié au logement (7) par une liaison articulée, est formé comme une vis de serrage (9), la vis de serrage (9) est agencée commutable entre une position de traction traversante, dans laquelle la courroie de serrage (2) est apte à être tirée à travers le logement (7), et une position d'engagement, dans laquelle la vis de serrage (9) est apte à venir en prise avec la géométrie d'engagement (3), et dans lequel la vis de serrage (9) présente une section filetée (10), une pointe (11) à une extrémité et une géométrie de contact en torsion (12) à l'autre extrémité, dans lequel la liaison articulée est agencée dans la région de la pointe (11) de la vis de serrage (9), **caractérisé en ce que** la vis de serrage (9) présente une section intermédiaire (13) située entre la section filetée (10) et la géométrie de contact en torsion (12), la section intermédiaire présentant un diamètre croissant et venant, dans la position de traction traversante, en butée contre un bord intérieur (22), éloigné de la courroie de serrage (2), du logement (7).

2. Dispositif de serrage selon la revendication 1, **caractérisé en ce que** la liaison articulée autorise un déplacement de la vis de serrage (9) le long de son axe longitudinal.

3. Dispositif de serrage selon la revendication 1 ou 2, **caractérisé en ce que** la vis de serrage (9) est retenue captive dans le logement (7).

4. Dispositif de serrage selon l'une des revendications 1 à 3, **caractérisé en ce que** la vis de serrage (9) présente une extension (15), reliée à la section filetée (10), laquelle extension est insérée dans une ouverture (19) dans le logement (7) et présente un épaississement (16) à son extrémité opposée à la section filetée (10).

5. Dispositif de serrage selon la revendication 4, **caractérisé en ce que** l'extension (15), entre la section filetée (10) et l'épaississement (16), est lisse.

6. Dispositif de serrage selon la revendication 4 ou 5, **caractérisé en ce que** l'ouverture (19) dans le logement (7) est agencée comme un trou allongé dans lequel la pointe de la vis de serrage (9) est protubérante.

7. Dispositif de serrage selon la revendication 6, **caractérisé en ce que** le trou allongé autorise un déplacement de la vis de serrage (9) perpendiculairement à la courroie de serrage (2).

8. Dispositif de serrage selon l'une des revendications 1 à 7, **caractérisé en ce que** la vis de serrage (9), du côté de la section intermédiaire (13) qui est opposé à la section filetée (10), comprend une surface externe conique présentant un diamètre croissant (14), dans lequel la surface externe conique est conçue de manière à interagir avec un biseau (23) situé au niveau du seuil d'ouverture (21) du logement (7).
